# EUROPEAN PATENT APPLICATION

(11) **EP 4 447 157 A1**
(43) Date of publication of application: **16.10.2024**
(21) Application number: 23807968.5
(22) Date of filing: 22.05.2023
(51) Int. Cl.: H01M 4/36, H01M 4/525, H01M 4/505, H01M 4/131, H01M 4/02

(54) **CATHODE ACTIVE MATERIAL AND MANUFACTURING METHOD THEREFOR**

(30) Priority: 20.05.2022 KR 20220062248
(71) Applicant: LG Chem, Ltd., Yeongdeungpo-gu Seoul 07336 (KR)
(72) Inventor: JUNG, Won Sig, Daejeon 34122 (KR); PARK, Hyun Ah, Daejeon 34122 (KR); RHEE, Tae Young, Daejeon 34122 (KR); JUNG, Yong Jo, Daejeon 34122 (KR); KIM, Jong Pil, Daejeon 34122 (KR); LEE, Eung Ju, Daejeon 34122 (KR)
(74) Representative: Hoffmann Eitle
(86) International application number: PCT/KR2023/006945
(87) International publication number: WO 2023/224449

(57) **Abstract**

The present invention relates to a positive electrode active material including: a lithium transition metal oxide in the form of a single particle; and a coating part which is formed on the surface of the lithium transition metal oxide in the form of a single particle and contains cobalt, wherein the lithium transition metal oxide in the form of a single particle comprises interfaces divided into a strong boundary having collapse of a layered structure in a crystal particle and a weak boundary having no collapse of the layered structure, and the coating part is formed only at the strong boundary among the interfaces, and a method for producing the positive electrode active material.

## Description

### TECHNICAL FIELD

This application claims the benefit of Korean Patent Application No. 10-2022-0062248, filed on May 20, 2022, in the Korean Intellectual Property Office, the disclosure of which is incorporated herein in its entirety by reference.

The present invention relates to a positive electrode active material and a method for producing the same.

### BACKGROUND ART

Recently, as technology in electric vehicles, etc. is developed, demand for high-capacity secondary batteries has been increasing, and accordingly, research on a positive electrode using a high-Ni positive electrode active material having excellent capacity characteristics has been actively carried out.

Since the co-precipitation method is used to produce the high-Ni positive electrode active material, the produced high-Ni positive electrode active material has the form of a secondary particle in which primary particles are aggregated. However, the active material having the form of the secondary particle has the disadvantages that fine cracks are generated in the secondary particle during a long charging and discharging process to cause a side reaction, and the secondary particle also causes the structure of the secondary particle to collapse when the electrode density is increased in order to improve the energy density, thereby causing a decrease in energy density and a deterioration in life characteristics due to a reduction in the active material and an electrolyte solution.

In order to solve the limitation of the high-nickel positive electrode active material in the form of secondary particles, recently, a single particle-type nickel-based positive electrode active material is being developed. The single particle-type nickel-based positive electrode active material has the advantage that particle collapse does not occur even when the electrode density is increased for a high energy density. However, since the single particle-type nickel-based positive electrode active material requires a relatively high sintering temperature in order to produce the same, the layered structure of R-3m is not properly maintained, and as lithium escapes from the crystal structure, the phase changes to the Fm-3m lock-salt structure such as NiO and the crystallinity of the positive electrode active material deteriorates, and thus the ratio of NiO increases on the surface part of the produced single particle, and there are limitations in that as NiO increases, the resistance increases, and the energy density and the output decrease. In addition, in the case where the sintering temperature is lowered, the single particle-type nickel-based positive electrode active material is present in the form of an over-sintered secondary particle, and thus there is a limitation in that effects of improving a life and gas generation do not reach a level that is expected for the single particle.

Accordingly, there remains a need for development on a positive electrode active material having a high electrode density and exhibiting excellent life characteristics and output characteristics.

### [Prior Art Document]

### [PATENT DOCUMENT]

(Patent Document 1) KR 2019-0094529 A1

### DISCLOSURE OF THE INVENTION

### TECHNICAL PROBLEM

An aspect of the present invention provides a positive electrode active material having a high electrode density and exhibiting excellent life characteristics and output characteristics.

Another aspect of the present invention provides a method for producing a positive electrode active material having a high electrode density and exhibiting excellent life characteristics and output characteristics.

### TECHNICAL SOLUTION

According to an aspect of the present invention, there is provided a positive electrode active material.
(1) The present invention provides a positive electrode active material including: a lithium transition metal oxide in the form of a single particle; and a coating part which is formed on the surface of the lithium transition metal oxide in the form of a single particle and contains cobalt, wherein the lithium transition metal oxide in the form of a single particle includes interfaces divided into a strong boundary having collapse of a layered structure in a crystal particle and a weak boundary having no collapse of the layered structure, and the coating part is formed only at the strong boundary among the interfaces.
(2) In (1) above, the present invention provides the positive electrode active material, wherein the lithium transition metal oxide in the form of a single particle includes 2 to 50 crystalline grains.
(3) In (1) or (2) above, the present invention provides the positive electrode active material, wherein the collapse of the layered structure of the strong boundary is collapse of a layered structure of a NiO layer.
(4) In any one of (1) to (3) above, the present invention provides the positive electrode active material, wherein the strong boundary shows a shade difference in an electron backscatter diffraction (EBSD) band contrast map and Euler map, and the weak boundary shows no shade difference in the EBSD band contrast map, and shows a shade difference in the Euler map.
(5) In any one of (1) to (4) above, the present invention provides the positive electrode active material, wherein the lithium transition metal oxide in the form of a single particle includes at least 10% of the strong boundary relative to the number of the total interfaces.
(6) In any one of (1) to (5) above, the present invention provides the positive electrode active material, wherein the strong boundary, in which the cobalt coating layer is formed, includes a layered structure of nickel cobalt manganese oxide converted from the NiO layer.
(7) In any one of (1) to (6) above, the present invention provides the positive electrode active material, wherein the cobalt coating layer formed at the strong boundary includes a composition of LiCoO₂.
(8) In any one of (1) to (7) above, the present invention provides the positive electrode active material, wherein the lithium transition metal oxide is a lithium composite transition metal oxide including nickel, cobalt, and manganese.
(9) In any one of (1) to (8) above, the present invention provides the positive electrode active material, wherein the lithium transition metal oxide is a lithium composite transition metal oxide represented by Formula 1 below:

   [Formula 1] LiₐNiₓCO_{y}M¹₂M²_{1-x-y-z}O₂

   In Formula 1 above, M¹ is at least one selected from the group consisting of Mn and Al, M² is at least one selected from the group consisting of B, Ba, Ce, Cr, F, Mg, V, Ti, Fe, Zr, Zn, Si, Y, Nb, Ga, Sn, Mo, W, P, S, Sr, Ta, La, and Hf, 1.0≤a≤1.3, 0.6≤x<1.0, 0≤y≤0.4, and 0≤z≤0.4.
(10) In any one of (1) to (9) above, the present invention provides the positive electrode active material, wherein the lithium transition metal oxide is a lithium composite transition metal oxide represented by Formula 2 below:

   [Formula 2] LiₐNi_{b}Co_{c}Mn_{d}M¹ₑO₂

   where, in Formula 2 above, M¹ is at least one selected from the group consisting of Al, Zr, B, W, Mo, Cr, Nb, Mg, Hf, Ta, La, Ti, Sr, Ba, Ce, Sn, Y, Zn, F, P, and S, 0.9≤a≤1.1, 0.8≤b<1, 0<c<0.2, 0<d<0.2, 0≤e<0.1, and b+c+d+e=1.
   ] In addition, according to another aspect of the present invention, there is provided a method for producing a positive electrode active material.
(11) The present invention provides a method for producing a positive electrode active material, the method including the steps of: 1) mixing lithium transition metal oxide particles in the form of a single particle with a cobalt source; and 2) heat-treating the mixture in step 1).
(12) In (11) above, the present invention provides the method, wherein in step 1), an additional metal source is further mixed.
(13) In (11) or (12) above, the present invention provides the method, wherein the heat-treating in step 2) is performed at 500-800 °C.

### ADVANTAGEOUS EFFECTS

The positive electrode active material of the present invention is a single particle-type positive electrode active material including a lithium transition metal oxide in the form of a single particle, wherein the coating part containing cobalt only at the strong boundary among the interfaces of the crystal particle is formed, and thus may have high electrode density, and exhibit excellent life characteristics and output characteristics.

### BRIEF DESCRIPTION OF THE DRAWINGS

FIG. 1(a) is an EBSD band contrast map for a positive electrode active material of Example 1, FIG. 1(b) is an EPMA cobalt element map, and FIG. 1(c) is an Euler map.
FIG. 2 is an EPMA cobalt element map of Comparative Example 1.
FIG. 3(a) is an EBSD band contrast map for a positive electrode active material of Comparative Example 3, FIG. 3(b) is an EPMA cobalt element map, and FIG. 1(c) is an Euler map.
FIG. 4 is an SEM image of a positive electrode active material of Comparative Example 7.

### MODE FOR CARRYING OUT THE INVENTION

Hereinafter, the present invention will be described in more detail to aid in understanding the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

As used herein, the term "primary particle" refers to a minimum particle unit distinguished as a single lump when the cross-section of the positive electrode active material is observed through a scanning electron microscope (SEM), and may be composed of a plurality of crystalline grains.

As used herein, the term "secondary particle" refers to a secondary structure formed by aggregation of a plurality of primary particles. An average particle diameter of the secondary particle may be measured through a particle size analyzer.

As used herein, the term "form of a single particle" may be used interchangeably with the term "single particle-type," and refers to a shape that contrasts with a secondary particle shape formed by aggregation of hundreds of primary particles prepared by a conventional method. In addition, the term "single particle-type positive electrode active material" or "lithium transition metal oxide in the form of a single particle" as used herein is a concept that contrasts with a positive electrode active material in the form of a secondary particle formed by aggregation of hundreds of primary particles prepared by the conventional method, and refers to a positive electrode active material or a lithium transition metal active material consisting of 1-50 particles, 1-40 particles, 1-30 particles, 1-20 particles, 1-15 particles, 1-10 particles, or 1-5 particles.

As used herein, the term "single crystal" may be used interchangeably with the term "single crystalline," and refers to a positive electrode active material or a lithium transition metal oxide including 2-50 crystalline grains, specifically, 2-30 crystalline grains. Typically, single crystal particles represent particles in which the entire sample consists of only a single crystalline grain or grain region. In the present invention, the single particle-type positive electrode active material or the lithium transition metal oxide in the form of a single particle may exhibit characteristics similar to those of a single crystal particle by including a few crystalline grains.

The "single particle" refers to a minimum unit of a particle recognized when a positive electrode active material is observed through a scanning electron microscope, and the "crystalline grain" or "grain region" refers to a region in which atoms in a sample are continuously and periodically arranged in one direction. The crystalline grains may be analyzed using an electron backscatter diffraction (EBSD) analyzer.

As used herein, the term "average particle diameter (D₅₀)" refers to a particle diameter at 50% of a volume cumulative distribution according to the particle diameter. With respect to the average particle diameter, D₅₀ may be measured by dispersing powder to be measured in a dispersion medium, introducing the powder into a commercially available laser diffraction particle size measuring apparatus (for example, S3500 made by Microtrac, Inc.), measuring a difference in diffraction pattern according to a particle size when the particles pass through a laser beam to calculate a particle size distribution, and calculating a particle diameter at 50% of a volume cumulative distribution according to the particle diameter in the measuring apparatus.

A positive electrode active material of the present invention includes: a lithium transition metal oxide in the form of a single particle; and a coating part which is formed on the surface of the lithium transition metal oxide in the form of a single particle and contains cobalt, wherein the lithium transition metal oxide in the form of a single particle includes interfaces divided into a strong boundary having collapse of a layered structure in a crystal particle and a weak boundary having no collapse of the layered structure, and the coating part is formed only at the strong boundary among the interfaces.

In an example of the present invention, the interface may be a surface where any one single particle contained in the lithium transition metal oxide in the form of a single particle is in contact with another single particle, a surface where any one crystal grain is in contact with another crystal grain, or an interface formed by both of these.

The interfaces or boundaries may be divided into a strong boundary having collapse of a layered structure of a transition metal oxide layer and a weak boundary having no collapse of the layered structure. The strong boundary may be identified to show a shade difference in an electron backscatter diffraction (EBSD) band contrast map (BC map) and an Euler map (IPF map), and the weak boundary may be identified to show no shade difference in the EBSD band contrast map and show a shade difference in the Euler map. For example, in the Euler map, since a single crystal grain (single crystal domain) is measured in the same color, it is possible to distinguish each crystal grain from each other, but since the crystallinity is distinguished in the electron backscatter diffraction (EBSD) band contrast map, it is possible to measure only the part where the atomic structure of the grain is collapsed, and thus it is possible to measure only the strong interface having collapse of the atomic structure, that is, the collapse of the layered structure of the transition metal oxide layer.

The lithium transition metal oxide in the form of a single particle may include at least 10% of the strong boundary, specifically 10% to 80%, and more specifically 20% to 60%, relative to the number of the total interfaces. The strong boundary is a boundary having the collapse of the layered structure of the transition metal oxide layer, particularly, the layered structure of the NiO layer, and may cause cation mixing and structural instability, thereby causing limitations such as such as resistance increase, capacity decrease, and output decrease.

In the lithium transition metal oxide in the form of a single particle of the present invention, the coating part is formed only at the strong boundary among the interfaces, and the coating part is not formed at the weak boundary among the interfaces. When cobalt (Co) diffuses on the surface and the interface of the lithium transition metal oxide in the form of a single particle, cobalt is coated at the strong boundary having the collapse of the layered structure and the diffusion coating of cobalt is minimized at the weak boundary having no collapse of the layered structure, and thus the coating part containing cobalt is not formed.

Since the lithium transition metal oxide in the form of a single particle of the present invention is coated with cobalt at the strong boundary, that is, the interface having the collapse of the layered structure, it is possible to prevent the layered structure collapse layer from being exposed to the surface. The cobalt coating may convert the NiO layer in which the layered structure is collapsed at the strong boundary into a layered structure of nickel cobalt manganese (NCM) oxide, and may exhibit an effect of reducing the layered structure collapse layer included in the lithium transition metal oxide in the form of a single particle, so that the positive electrode active material including the cobalt coating may exhibit excellent cell characteristics. In addition, since the cobalt coating layer is not formed at the weak boundary having no collapse of the layered structure, an unnecessary cobalt coating layer may be prevented from acting as resistor or causing a decrease in capacity.

The positive electrode active material according to an embodiment of the present invention may include: a lithium transition metal oxide in the form of a single particle; and a coating part containing cobalt formed on the surface of the lithium transition metal oxide in the form of a single particle, wherein the coating part may be formed at the strong boundary and the surface of the lithium transition metal oxide in the form of a single particle.

The surface of the lithium transition metal oxide in the form of a single particle may have a layered (R-3m) structure, and the lithium transition metal oxide in the form of a single particle may induce the formation of NiO by the high sintering temperature required during the production of the lithium transition metal oxide in the form of a single particle, thereby having a high NiO content on the surface of the particle or in a region close to the surface. The coating part containing cobalt may be a layer formed by diffusing the cobalt from the surface of the lithium transition metal oxide in the form of a single particle toward the center, and the cobalt diffused in the process of forming the coating part may convert the NiO layer into the layered structure of nickel cobalt manganese (NCM) oxide, thereby reducing and eliminating causes of resistance increase, energy density decrease, output decrease, and the like, and thus may make it possible to exhibit excellent electrochemical properties. The coating part may include a composition of LiCoO₂.

If the coating part is formed on the surface of the lithium transition metal oxide in the form of a single particle, the coating part may be formed on a portion or the whole of the outer surface, and may be formed in a region of 10% to 100% (area%) based on the total area of the surface. Specifically, the coating part may be formed on a portion of the surface of the lithium transition metal oxide in the form of a single particle, and may be formed in region of 30% to 90% based on the total area of the surface.

The coating part may be formed in the form of islands on the surface of the lithium transition metal oxide. The form of islands refers to a shape formed discontinuously on the surface, that is, the coating part may be partially dispersed and distributed if the coating part is formed on the surface of the lithium transition metal oxide in the form of a single particle.

In the positive electrode active material according to an example of the present invention, the lithium transition metal oxide in the form of a single particle may be a lithium composite transition metal oxide including nickel (Ni), cobalt (Co), and manganese (Mn).

Specifically, the lithium transition metal oxide in the form of a single particle may be a lithium composite transition metal oxide represented by Formula 1 below:

[Formula 1] LiₐNiₓCo_{y}M¹₂M²_{1-x-y-z}O₂

In Formula 1 above, M¹ is at least one selected from the group consisting of Mn and Al, M² is at least one selected from the group consisting of B, Ba, Ce, Cr, F, Mg, V, Ti, Fe, Zr, Zn, Si, Y, Nb, Ga, Sn, Mo, W, P, S, Sr, Ta, La, and Hf, 0.9≤a≤1.3, 0.6≤x<1.0, 0≤y≤0.4, and 0≤z≤0.4.

a above represents a molar ratio of lithium in the lithium transition metal oxide, and may satisfy 1.0≤a≤1.3, specifically 1.0≤a≤1.25, and more specifically 1.0≤a≤1.20.

x represents a molar ratio of nickel in the total transition metals, and may satisfy 0.6≤x<1.0, specifically, 0.6≤x≤0.99 or 0.70≤x≤0.99, and more specifically, 0.8≤x≤0.95. If the nickel content satisfies the above range, excellent capacity characteristics may be achieved.

y above represents a molar ratio of cobalt in the total transition metals, and may satisfy 0≤y≤0.40, specifically 0≤y≤0.35, and more specifically, 0.01≤y≤0.30.

z above represents a molar ratio of element M¹ in the total transition metals, and may satisfy 0≤z≤0.40, specifically, 0≤z<0.35, and more specifically, 0.01≤z≤0.30.

1-x-y-z above represents a molar ratio of M² in the total transition metals, and may satisfy 0≤1-x-y-z≤0.4, specifically, 0≤1-x-y-z≤0.35, and more specifically, 0≤1-x-y-z≤0.30.

In addition, particularly, the lithium transition metal oxide may be a lithium composite transition metal oxide represented by Formula 2 below:

[Formula 2] Li_{b}Ni_{c}Co_{d}MnₑM¹_{f}O₂

In Formula 2 above, M¹ is at least one selected from the group consisting of Al, Zr, B, W, Mo, Cr, Nb, Mg, Hf, Ta, La, Ti, Sr, Ba, Ce, Sn, Y, Zn, F, P, and S, 0.9≤b≤1.1, 0.8≤c<1, 0<d<0.2, 0<e<0.2, 0≤f<0.1, and c+d+e+f=1.

In addition, particularly, the lithium transition metal oxide may be a lithium composite transition metal oxide represented by Formula 3 below:

[Formula 3] Li_{g}NiₕCoᵢMnⱼO₂

In Formula 3 above, 0.9≤g≤1.1, 0.8≤h<1, 0<i<0.2, 0<j<0.2, and h+i+j=1.

The positive electrode active material may have an average particle diameter (D₅₀) of 1-50 µm in consideration of a specific surface area and a positive electrode mixture density, and specifically, may have an average particle diameter (D₅₀) of 2-20 µm. The positive electrode active material according to an example of the present invention may be a single particle-type positive electrode active material formed by aggregation of particles having an average particle diameter (D₅₀) of 0.1 µm to 10 µm. If the average particle diameter of the particles satisfies the above range, the positive electrode active material may have the advantages in a rolling ratio, an electrode void, and the like, and if the average particle diameter is less or greater than the above range, the performance may be deteriorated in an electrode capacity, life characteristics, resistance, and the like.

The present invention also provides a method for producing the positive electrode active material.

The positive electrode active material may be prepared by the production method including the steps of: 1) mixing lithium transition metal oxide particles in the form of a single particle with a cobalt source; and 2) heat-treating the mixture in step 1).

In step 1), the cobalt source may be used in an amount of 0.1 mol% to 10 mol%, specifically, 0.5 mol% to 5 moll, and more specifically, 1 mol% to 3 mol%, based on the positive electrode active material. If the cobalt source is used in an amount less than the amount in the above range, a sufficient coating layer may not be formed at the strong boundary included in the lithium transition metal oxide particle, and if the cobalt source is used in an amount greater than the amount in the above range, a cobalt coating may be formed more than necessary or unreacted cobalt compounds may remain on the particle surface, resulting in disadvantages such as an increase in resistance and a decrease in capacity.

In step 1), a process for further mixing an additional metal source may be performed. The additional metal source may be used together with the cobalt source to be coated at the strong boundary of the lithium transition metal oxide in the form of a single particle, or may be coated on at least one among the surface, the strong boundary, and the weak boundary of the lithium transition metal oxide in the form of a single particle. The coating formed by the additional metal source may be mixed with the cobalt coating layer that the cobalt source forms at the strong boundary included in the lithium transition metal oxide particles in the form of a single particle or may be formed as a separate coating layer. The additional metal source may be formed as the form of a metal oxide, a lithium metal oxide, a cobalt metal oxide, or a lithium cobalt metal oxide.

The mixing of step 1) may be dry-mixing, for example, mixing a powder-type cobalt source material with the lithium transition metal oxide in the form of a single particle without a solvent. Such dry mixing may be a simple mixing process, and may exhibit the advantages of cost reduction and quality stabilization by simplifying processes.

In step 2) of heat-treating the mixture in step 1), the coating part is formed as the cobalt diffuses from the surface of the lithium transition metal oxide in the form of a single particle toward the center, and the coating part is formed at the strong boundary of the lithium transition metal oxide in the form of a single particle. When the coating part is formed at the strong boundary, the coating part in the form of islands may be discontinuously formed on the surface of the lithium transition metal oxide. In the method for producing a positive electrode active material according to an embodiment of the present invention, the lithium transition metal oxide particles in the form of a single particle are dry-mixed with the cobalt (Co) source, and then heat-treated, and thus the coating part may be formed in the form of islands.

The heat treatment of step 2) may be performed at 500 °C to 800 °C, specifically, at 600 °C to 800 °C, and more specifically, at 650 °C to 750 °C.

If the heat treatment temperature satisfies the above range, the cobalt of the cobalt coating present on the surface of the lithium transition metal oxide in the form of a single particle is appropriately diffused during the heating process for the heat treatment, and the NiO degradation layer at the strong boundary may be appropriately changed into the layered structure of nickel cobalt manganese (NCM) oxide. If the heat treatment temperature of step 2) is low, the cobalt may partially be coated only on the surface of the lithium transition metal oxide in the form of a single particle and may not be appropriately coated at the strong boundary, if the heat treatment temperature of step 2) is high, the cobalt is deeply doped into the lithium transition metal oxide in the form of a single particle, and thus the cobalt coating may not be properly formed at the strong boundary.

The heat treatment of step 2) may be performed for 2 hours to 12 hours, specifically, 2 hours to 9 hours, and more specifically, 2 hours to 6 hours. If the heat treatment is performed within the above time range, excellent productivity may be exhibited, and uniform sintering may be achieved at the same time.

The cobalt source may be an oxide, a hydroxide, an oxyhydroxide, a carbonate, a sulfate, a halide, a sulfide, an acetate, a nitrate, a carboxylate, which contain cobalt, a combination thereof, or the like, for example, may include Co(OH)₂, CoOOH, Co(OCOCH₃)₂·4H₂O, Co(NO₃)₂·6H₂O, Co(SO₄)₂·7H₂O, or the like, and any one or a mixture of two or more thereof may be used, and specifically, Co(OH)₂ may be used.

The additional metal source may be, for example, an oxide, a hydroxide, an oxyhydroxide, a carbonate, a sulfate, a halide, a sulfide, an acetate, a nitrate, a carboxylate which contain at least one element selected from the group consisting of Al, Ti, W, B, F, P, Mg, Fe, Cr, V, Cu, Ca, Zn, ZR, Nb, Mo, Sr, Sb, Bi, Si, Cr, Hf, Ta, La, Ba, Ce, Sn, Y, and S, or a combination thereof, and specifically may include ZnO, Al₂O₃, Al(OH)₃, AlSO₄, AlCl₃, Al-isopropoxide, AlNO₃, TiO₂, WO₃, AlF, H₂BO₃, HBO₂, H₃BO₃, H₂B₄O₇, B₂O₃, C₆H₅B(OH)₂, (C₆H₅O)₃B, (CH₃(CH₂)₃O)₃B, C₃H₉B₃O₆, (C₃H₇O₃)B, Li₃WO₄, (NH₄)₁₀W₁₂O₄₁·5H₂O, NH₄H₂PO₄, or the like, but is not limited thereto.

The additional metal source may be used in an amount such that the total amount of the additional metal becomes 100 ppm to 50,000 ppm, specifically, 200 ppm to 10,000 ppm, based on the total number of moles of metals in the positive electrode active material. If the additional metal is included in the above range, an effect of effectively suppressing a side reaction with the electrolyte solution may be expected, and electrochemical properties may be further improved.

In an example of the present invention, the lithium transition metal oxide particles in the form of a single particle may be prepared by mixing a transition metal oxide precursor and a lithium raw material to perform primary sintering, and disintegrating the pre-sintered product prepared by the primary sintering and then performing secondary sintering.

According to another embodiment of the present invention, there is provided a positive electrode including the above-described positive electrode active material.

Specifically, the positive electrode includes a positive electrode current collector and a positive electrode active material layer which is formed on the positive electrode current collector, and includes the positive electrode active material.

The positive electrode current collector is not particularly limited as long as it has conductivity without causing adverse chemical changes in the battery, and, for example, stainless steel, aluminum, nickel, titanium, sintered carbon, or aluminum or stainless steel that is surface-treated with one of carbon, nickel, titanium, silver, or the like may be used. Also, the positive electrode current collector may typically have a thickness of 3 um to 500pm, and microscopic irregularities may be formed on the surface of the current collector to improve the adhesion of the positive electrode active material. For example, the positive electrode current collector may be used in various forms such as a film, a sheet, a foil, a net, a porous body, a foam, and a non-woven body.

The positive electrode active material layer may include a conductive agent and a binder in addition to the above-described positive electrode active material.

In this case, the conductive agent is used to provide conductivity to the electrode, and any conductive agent may be used without particular limitation as long as it has electron conductivity without causing adverse chemical changes in the battery to be constituted. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% based on the total weight of the positive electrode active material layer.

The binder serves to improve binding between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is produced by mixing or dispersing the positive electrode active material as well as optionally the binder and the conductive agent in a solvent, is coated on the positive electrode current collector, and the positive electrode may then be produced by drying and rolling the coated positive electrode current collector. In this case, the type and content of the positive electrode active material, the binder, and the conductive agent are the same as those described above.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode current collector.

According to another example of the present invention, an electrochemical device including the positive electrode is provided. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein the positive electrode is as described above. Also, the lithium secondary battery may further selectively include a battery container accommodating an electrode assembly of the positive electrode, the negative electrode, and the separator, and a sealing member sealing the battery container.

In the lithium secondary battery, the negative electrode includes a negative electrode current collector and a negative electrode active material layer positioned on the negative electrode current collector.

The negative electrode current collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode current collector may typically have a thickness of 3 um to 500 µm, and, similar to the positive electrode current collector, microscopic irregularities may be formed on the surface of the current collector to improve the adhesion of a negative electrode active material. For example, the negative electrode current collector may be used in various forms such as a film, a sheet, a foil, a net, a porous body, a foam, and a non-woven fabric body.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be doped and undoped with lithium such as SiOₓ(0 < x < 2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

Also, the binder and the conductive agent may be the same as those described above in the positive electrode.

The negative electrode active material layer may be prepared by, for example, coating and drying a composition for forming a negative electrode prepared by dispersing the negative electrode active material and optionally the binder and the conductive agent in a solvent on the negative electrode current collector, or by casting the composition for forming a negative electrode on a separate support and then laminating a film obtained by peeling off from the support on the negative electrode current collector.

Meanwhile, in the lithium secondary battery, the separator separates the negative electrode and the positive electrode and provides a movement path of lithium ions, wherein any separator may be used as the separator, without particular limitation, as long as it is typically used in a lithium secondary battery, and particularly, a separator having high moisture-retention ability for an electrolyte solution as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the manufacture of the lithium secondary battery, but is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used as the lithium salt. It is preferable to use the lithium salt in a concentration range of 0.1 M to 2.0 M. When the concentration of the lithium salt is included within the above range, the electrolyte may have suitable conductivity and viscosity, thereby exhibiting excellent performance, and lithium ions may effectively migrate.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, *N,N-*substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle (HEV), and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

### Examples

Hereinafter, examples of the present invention will be described in detail so that a person with ordinary skill in the art to which the present invention pertains can easily carry out the present invention. The present invention may, however, be embodied in many different forms and should not be construed as being limited to the examples set forth herein.

### Preparation Example 1

A positive electrode active material precursor (composition: Ni_{0.95}Co_{0.03}Mn_{0.02}(OH)₂, and an average particle diameter (D₅₀) of 3.5 µm) and LiOH as a lithium raw material were mixed at a molar ratio of 1:1.05, and the mixture was primarily sintered at 850 °C in an oxygen atmosphere for 9 hours to prepare a pre-sintered product, the pre-sintered product was disintegrated and then secondarily sintered at 750 °C for 9 hours in an oxygen atmosphere to prepare a lithium transition metal oxide in the form of a single particle.

### Preparation Example 2

A positive electrode active material precursor (composition: Ni_{0.88}Co_{0.03}Mn_{0.09}(OH)₂, and an average particle diameter (D₅₀) of 3.5 µm) and LiOH as a lithium raw material were mixed at a molar ratio of 1:1.05, and the mixture was primarily sintered at 880 °C in an oxygen atmosphere for 9 hours to prepare a pre-sintered product, the pre-sintered product was disintegrated and then secondarily sintered at 750 °C for 9 hours in an oxygen atmosphere to prepare a lithium transition metal oxide in the form of a single particle.

### Preparation Example 3

A lithium transition metal oxide in the form of a single particle was prepared in the same manner as in Preparation Example 1, except that the primary sintering temperature was changed to 820 °C instead of 850 °C in Preparation Example 1.

### Preparation Example 4

A positive electrode active material precursor (composition: Ni_{0.95}Co_{0.03}Mn_{0.02}(OH)₂, and an average particle diameter (D₅₀) of 3.5 µm) and LiOH as a lithium raw material were mixed at a molar ratio of 1:1.05, and the mixture was sintered at 740 °C in an oxygen atmosphere for 9 hours to prepare a lithium transition metal oxide.

### Preparation Example 5

A positive electrode active material precursor (composition: Ni_{0.88}Co_{0.03}Mn_{0.09}(OH)₂, and an average particle diameter (D₅₀) of 3.5 µm) and LiOH as a lithium raw material were mixed at a molar ratio of 1:1.05, and the mixture was sintered at 800 °C in an oxygen atmosphere for 9 hours to prepare a lithium transition metal oxide.

### Example 1

The lithium transition metal oxide in the form of a single particle prepared in Preparation Example 1 and Co(OH)₂, a cobalt source, in the form of powder (Huayou Cobalt Co., Ltd.) were mixed in amounts of 98 mol% and 2 mol%, respectively.

The mixture was heat-treated at 700 °C for 5 hours to obtain a cake-state positive electrode active material, which was pulverized to prepare a single particle-type positive electrode active material in the form of powder.

### Example 2

A single particle-type positive electrode active material in the form of powder was prepared in the same manner as in Example 1, except that the lithium transition metal oxide in the form of a single particle prepared in Preparation Example 2 was used instead of the lithium transition metal oxide in the form of a single particle prepared in Preparation Example 1.

### Example 3

A single particle-type positive electrode active material in the form of powder was prepared in the same manner as in Example 1, except that the lithium transition metal oxide in the form of a single particle prepared in Preparation Example 3 was used instead of the lithium transition metal oxide in the form of a single particle prepared in Preparation Example 1.

### Example 4

A single particle-type positive electrode active material in the form of powder was prepared in the same manner as in Example 1, except that the heat-treatment temperature of the mixture was changed to 600 °C.

### Comparative Example 1

A lithium transition metal oxide in the form of a single particle prepared in Preparation Example 1 above was used as a positive electrode active material in the form of a single particle.

### Comparative Example 2

A lithium transition metal oxide in the form of a single particle prepared in Preparation Example 2 above was used as a positive electrode active material in the form of a single particle.

### Comparative Example 3

A single particle-type positive electrode active material in the form of powder was prepared in the same manner as in Example 1, except that the mixture was heat-treated at 400 °C in Example 1.

### Comparative Example 4

A single particle-type positive electrode active material in the form of powder was prepared in the same manner as in Example 1, except that the mixture was heat-treated at 900 °C in Example 1.

### Comparative Example 5

A single particle-type positive electrode active material in the form of powder was prepared in the same manner as in Example 2, except that the mixture was heat-treated at 400 °C in Example 2.

### Comparative Example 6

A single particle-type positive electrode active material in the form of powder was prepared in the same manner as in Example 2, except that the mixture was heat-treated at 900 °C in Example 2.

### Comparative Example 7

A single particle-type positive electrode active material in the form of powder was prepared in the same manner as in Example 1, except that the lithium transition metal oxide prepared in Preparation Example 4 was used instead of the lithium transition metal oxide in the form of a single particle prepared in Preparation Example 1.

### Comparative Example 8

A single particle-type positive electrode active material in the form of powder was prepared in the same manner as in Example 1, except that the lithium transition metal oxide in the form of a single particle prepared in Preparation Example 5 was used instead of the lithium transition metal oxide in the form of a single particle prepared in Preparation Example 1.

### Comparative Example 9

The lithium transition metal oxide in the form of a single particle prepared in Preparation Example 1 and Co(OH)₂, a cobalt source, in the form of powder (Huayou Cobalt Co., Ltd.) were mixed in amounts of 99.98 mol% and 0.02 mol%, respectively.

The mixture was heat-treated at 750 °C for 5 hours to obtain a cake-state positive electrode active material, which was pulverized to prepare a single particle-type positive electrode active material in the form of powder.

### Experimental Example 1: Analysis of Positive Electrode Active Material

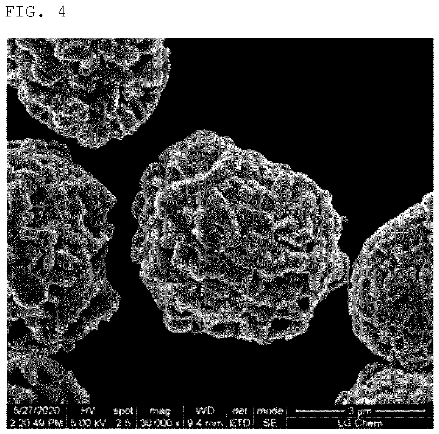

An ion milling system (HITACHI, IM5000) was used (acceleration voltage: 6 kV) for each of the single particle-type positive electrode active materials in the form of a single particle prepared in Example 1 and Comparative Examples 1 and 3, and Ar ion milling was performed for 2 hours to prepare a cross section specimen.
1) A field emission scanning electron microscope (SEM, JEOL JSM-7900F) was used (at an acceleration voltage of 20 kV) for each cross section specimen of the single particle-type positive electrode active materials in the form of a single particle prepared in Example 1 and Comparative Example 3 to create an EBSD band contrast map. AztecCrystal manufactured by Oxford Instruments plc. was used as an image processing-EBSD quantification analysis software.
2) For each cross section specimen of the single particle-type positive electrode active materials in the form of a single particle prepared in Example 1 and Comparative Examples 1 and 3, an electron probe micro analyzer (EPMA, JEOL JXA-8530F) was used (at an acceleration voltage of 15 kV) to obtain an EPMA cobalt element map.
3) For each cross section specimen of the single particle-type positive electrode active materials in the form of a single particle prepared in Example 1 and Comparative Example 3, the field emission scanning electron microscope (SEM, JEOL JSM-7900F) was used (at an acceleration voltage of 20 kV) to measure and analyze the cross section of the positive electrode. AztecCrystal manufactured by Oxford Instruments plc. was used as an image processing-EBSD quantification analysis software to create an Euler map.

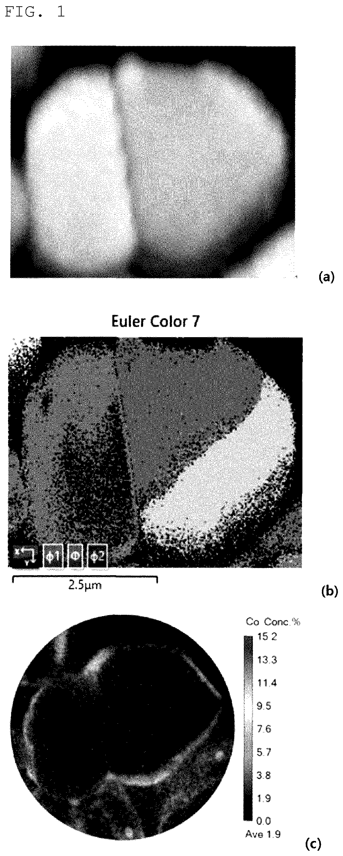

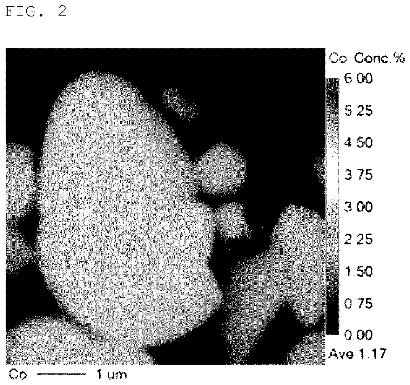

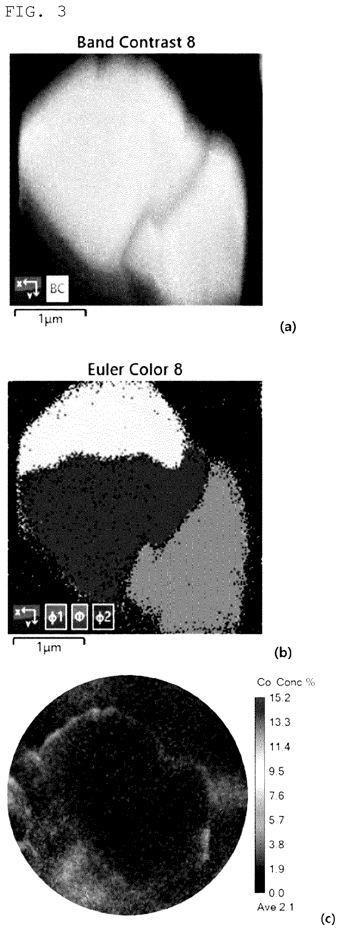

   FIG. 1 shows the result of Example 1, FIG. 2 shows the result of Comparative Example 1, and FIG. 3 shows the result of Comparative Example 3.
4) An SEM image was taken with respect to the surface of the positive electrode active material prepared in Comparative Example 7 using the field emission scanning electron microscope (SEM, JEOL JSM-7900F). The results are shown in FIG. 4.

FIG. 1(a) shows an EBSD band contrast map for the positive electrode active material of Example 1, FIG. 1(b) shows an EPMA cobalt element map, and FIG. 1(c) shows an Euler map. Referring to FIG. 1, in the positive electrode active material of Example 1, three grains and two interfaces between the grains are observed on the Euler map in FIG. 1(c). On the other hand, in the EBSD band contrast map in FIG. 1(a), only two regions and one interface between the regions are observed. The interface commonly observed in the EBSD band contrast map and the Euler map is the strong interface, and the interface which is not observed in the EBSD band contrast map but can be observed in the Euler map is the weak interface. Referring to the EPMA cobalt element map in FIG. 1(b), the cobalt (Co) coating layer was observed only at the strong interface, and it was confirmed that the cobalt (Co) coating layer was formed only at the strong interface when the lithium transition metal oxide in the form of particles and Co(OH)₂, a cobalt source, in the form of powder were mixed and sintered.

Thus, it was confirmed that the lithium transition metal oxide prepared by disintegrating the pre-sintered product prepared by performing the primary sintering as in Preparation Example 1 and then performing the secondary sintering was in the form of a single particle, and it was confirmed that the positive electrode active material of Example 1 prepared using the lithium transition metal oxide was also in the form of a single particle. In addition, it was confirmed that the positive electrode active material of Example 1 includes the strong boundary and the weak boundary in the lithium transition metal oxide crystal particle, and the cobalt (Co) coating layer is formed at the strong boundary, and the cobalt (Co) coating layer is not formed at the weak boundary.

FIG. 2 shows an EPMA cobalt element map of Comparative Example 1. In Comparative Example 1, the lithium transition metal oxide in the form of a single particle prepared in Preparation Example 1 was used without an additional cobalt coating process, and referring to FIG. 2, it was confirmed that cobalt (Co) was uniformly distributed in the cross section of the positive electrode active material in Comparative Example 1.

FIG. 3(a) shows an EBSD band contrast map for the positive electrode active material of Comparative Example 3, FIG. 3(b) shows an EPMA cobalt element map, and FIG. 3(c) shows an Euler map. Referring to FIG. 3, in the positive electrode active material of Comparative Example 3, three grains and two interfaces between the grains are observed on the Euler map in FIG. 3(c). On the other hand, in the EBSD band contrast map in FIG. 3(a), only two regions and one interface between the regions are observed. The interface commonly observed in the EBSD band contrast map and the Euler map is the strong interface, and the interface which is not observed in the EBSD band contrast map but can be observed in the Euler map is the weak interface. In Comparative Example 3, when the lithium transition metal oxide in the form of a single particle prepared in Preparation Example 1 and Co(OH)₂, a cobalt source, in the form of powder were mixed and heat-treated, the heat treatment was performed at 400 °C, which is relatively lower than 700 °C of Example 1. Referring to the EPMA cobalt element map in FIG. 3(b), it was confirmed that the cobalt (Co) coating was not observed on both the strong boundary and the weak boundary of the positive electrode active material of Comparative Example 3, and the cobalt coating layer was observed only on the surface of the positive electrode active material, so that the cobalt coating layer was not properly formed at the strong interface when the heat treatment temperature for sintering at the time of forming the cobalt coating layer was low.

FIG. 4 shows an SEM image of the positive electrode active material of Comparative Example 7. Referring to FIG. 4, it may be confirmed that the positive electrode active material of Comparative Example 7 is in the form of a secondary particle formed by the aggregation of at least 50 primary particles. Thus, it was confirmed that the lithium transition metal oxide prepared by only a single sintering process as in Preparation Example 4 represents the form of a secondary particle, and thus the positive electrode active material of Comparative Example 7 prepared using the lithium transition metal oxide is also in the form of a secondary particle.

### Experimental Example 2: Evaluation of Electrochemical Properties

### Manufacture of Positive Electrode and Half-cell

The positive electrode active material prepared in Example 1, carbon black (DenkaBlack, Denka Co., Ltd.) as a conductive agent, and PVdF (KF1300, Kureha Co., Ltd.) as a binder were added at a weight ratio of 97.5:1:1.5 (positive electrode active material:conductive agent:binder) in a solvent (N-methylpyrrolidone (NMP), Daejung Chemicals, Co., Ltd.) to prepare a composition for forming a positive electrode active material layer.

The prepared composition for forming a positive electrode active material layer was coated on one surface of an aluminum foil current collector having a thickness of 12 µm and dried at 135 °C for 3 hours to form a positive electrode active material layer. Subsequently, the positive electrode active material layer was rolled by a roll pressing method, and after the rolling, a positive electrode, in which a porosity of the positive electrode active material layer was 24%, was manufactured.

A positive electrode was manufactured in the same manner as in the above method by using the positive electrode active materials of Examples 2 to 4 and Comparative Examples 1 to 9, respectively, instead of the positive electrode active material prepared in Example 1.

A half-cell was manufactured using a lithium metal as a negative electrode together with the manufactured positive electrode.

### Evaluation Method of Electrochemical Properties

The coil half-cell manufactured above was charged at a constant current (CC) of 0.2 C at 25 °C until the voltage reached 4.25 V, and was subsequently charged at a constant voltage (CV) until a charge current reached 0.05 C (cut-off current), and charge capacity was measured. Thereafter, the coin half-cell was allowed to stand for 20 minutes, and then discharged until the voltage reached 2.5 V at a constant current of 0.2 C to measure the discharge capacity at the first cycle. The coin half-cell was fully charged in the same manner, and 0.2 C of discharging current was applied thereto for 10 seconds to divide, by a current, the voltage difference between immediately before the current is applied and 10 seconds after the current is applied to measure initial resistance (DCIR).

The cell in which one cycle was completed was transferred to a 45 °C chamber and charging and discharging was repeated at 0.33 C until the 40th cycle, and the discharge capacity at the 40th cycle was measured to calculate the discharge capacity of the 40th cycle compared to the discharge capacity of the first cycle, thereby evaluating capacity retention. In addition, while the cell was discharged at the 40th cycle at a constant current (CC) of 0.2 C until it reached 2.5 V, a change in a voltage from the fully charged state up to 10 seconds of discharging was divided by a current to measure discharge resistance (40th DCR) at the 40th cycle, and the discharge resistance at the 40th cycle compared to the initial resistance (1st DCR) was calculated to obtain a resistance increase rate (%), which was indicated as life resistance (%).

**[Table 1]**

| | Charge capaci ty (mAh) | Dischar ge capacit y (mAh) | Initial resista nce (Ω) | Capacit y retenti on (%) | Life resista nce (%) | Notes | | |
|---|---|---|---|---|---|---|---|---|
| | | | | | | Primary sinteri ng of active materia l | Seconda ry sinteri ng of active materia l | Coating layer formatio n temperat ure |
| Example 1 | 244.1 | 215.3 | 22.1 | 96.2 | 135.8 | 850°C | 750°C | 700°C |
| Example 2 | 232.1 | 209.0 | 17.9 | 96.6 | 141.3 | 880°C | 750°C | 700°C |
| Example 3 | 243.5 | 216.1 | 21.4 | 96.0 | 138.8 | 820°C | 750°C | 700°C |
| Example 4 | 240.1 | 211.2 | 24.7 | 96.0 | 138.2 | 850°C | 750°C | 600°C |
| Comparat ive Example 1 | 240.5 | 206.1 | 28.9 | 95.4 | 144.5 | 850°C | 750°C | - |
| Comparat ive Example 2 | 228.0 | 199.9 | 20.0 | 95.8 | 150.4 | 880°C | 750°C | - |
| Comparat ive Example 3 | 240.7 | 206.1 | 28.6 | 95.6 | 145.8 | 850°C | 750°C | 400°C |
| Comparat ive Example 4 | 241.3 | 207.2 | 25.8 | 95.9 | 136.7 | 850°C | 750°C | 900°C |
| Comparat ive Example 5 | 228.1 | 201.5 | 20.8 | 96.1 | 151.2 | 880°C | 750°C | 400°C |
| Comparat ive Example 6 | 229.8 | 205.9 | 17.7 | 96.3 | 148.7 | 880°C | 750°C | 900°C |
| Comparat ive Example 7 | 241.9 | 216.2 | 21.3 | 95.2 | 155.6 | 740°C | - | 700°C |
| Comparat ive Example 8 | 232.2 | 217.7 | 21.3 | 95.4 | 144.2 | 800°C | - | 700°C |
| Comparat ive Example 9 | 240.8 | 208.2 | 27.5 | 95.8 | 141.2 | 850°C | 750°C | 750°C |

Referring to Table 1 above, it may be confirmed that the positive electrode active materials of Examples 1 to 4 exhibit evenly excellent electrochemical properties such as high discharge capacity, capacity retention, low life resistance, and low initial resistance. On the other hand, the positive electrode active materials of Comparative Examples 1 to 6 and 9 exhibit relatively low discharge capacity, and also exhibit relatively inferior properties in at least one among the initial resistance, capacity retention, and life resistance. Meanwhile, it may be confirmed that the positive electrode active materials of Comparative Examples 7 and 8 exhibit high discharge capacity, but are not as good as those of Examples 1 to 4 in terms of life characteristics such as capacity retention and life resistance.

Such results are considered to be due to the fact that the positive electrode active materials of Examples 1 to 4 include the cobalt coating positioned at the strong interface, unlike Comparative Examples 1 to 9, and the cobalt coating positioned at the strong interface makes the NiO degradation layer into the NCM structure having a relatively high cobalt concentration, thereby improving cation mixing and structural instability due to the collapse of the layered structure. From this, it was confirmed that the positive electrode active material satisfying the configuration of the present invention may solve limitations such as an increase in resistance, a decrease in capacity, a decrease in output, and a deterioration in life characteristics.

## Claims

1. A positive electrode active material comprising:
a lithium transition metal oxide in the form of a single particle; and
a coating part which is formed on the surface of the lithium transition metal oxide in the form of a single particle and contains cobalt,
wherein the lithium transition metal oxide in the form of a single particle comprises interfaces divided into a strong boundary having collapse of a layered structure in a crystal particle and a weak boundary having no collapse of the layered structure, and
the coating part is formed only at the strong boundary among the interfaces.

2. The positive electrode active material of claim 1, wherein the lithium transition metal oxide in the form of a single particle comprises 2 to 50 crystalline grains.

3. The positive electrode active material of claim 1, wherein the collapse of the layered structure of the strong boundary is collapse of a layered structure of a NiO layer.

4. The positive electrode active material of claim 1, wherein the strong boundary shows a shade difference in an electron backscatter diffraction (EBSD) band contrast map and Euler map, and
the weak boundary shows no shade difference in the EBSD band contrast map, and shows a shade difference in the Euler map.

5. The positive electrode active material of claim 1, wherein the lithium transition metal oxide in the form of a single particle comprises at least 10% of the strong boundary relative to the number of the total interfaces.

6. The positive electrode active material of claim 1, wherein the strong boundary, in which the cobalt coating layer is formed, comprises a layered structure of nickel cobalt manganese oxide converted from the NiO layer.

7. The positive electrode active material of claim 1, wherein the cobalt coating layer formed at the strong boundary comprises a composition of LiCoO₂.

8. The positive electrode active material of claim 1, wherein the lithium transition metal oxide is a lithium composite transition metal oxide comprising nickel, cobalt, and manganese.

9. The positive electrode active material of claim 1, wherein the lithium transition metal oxide is a lithium composite transition metal oxide represented by Formula 1 below:
[Formula 1] LiₐNiₓCo_{y}M¹₂M²_{1-x-y-z}O₂
where, in Formula 1 above, M¹ is at least one selected from the group consisting of Mn and Al, M² is at least one selected from the group consisting of B, Ba, Ce, Cr, F, Mg, V, Ti, Fe, Zr, Zn, Si, Y, Nb, Ga, Sn, Mo, W, P, S, Sr, Ta, La, and Hf, 1.0≤a≤1.3, 0.6≤x<1.0, 0≤y≤0.4, and 0≤z≤0.4.

10. The positive electrode active material of claim 1, wherein the lithium transition metal oxide is a lithium composite transition metal oxide represented by Formula 2 below:
[Formula 2] LiₐNi_{b}Co_{c}Mn_{d}M¹ₑO₂
where, in Formula 2 above, M¹ is at least one selected from the group consisting of Al, Zr, B, W, Mo, Cr, Nb, Mg, Hf, Ta, La, Ti, Sr, Ba, Ce, Sn, Y, Zn, F, P, and S, 0.9≤a≤1.1, 0.8≤b<1, 0<c<0.2, 0<d<0.2, 0≤e<0.1, and b+c+d+e=1.

11. A method for producing the positive electrode active material of claim 1, the method comprising the steps of:
1) mixing lithium transition metal oxide particles in the form of a single particle with a cobalt source; and
2) heat-treating the mixture in step 1).

12. The method of claim 11, wherein in step 1), an additional metal source is further mixed.

13. The method of claim 11, wherein the heat-treating in step 2) is performed at 500-800 °C.
